# EUROPÄISCHE PATENTSCHRIFT

(11) **EP 0 412 997 B1**
(45) Veröffentlichungstag und Bekanntmachung des Hinweises auf die Patenterteilung: **12.05.1993**
(21) Anmeldenummer: 89905622.0
(22) Anmeldetag: 13.05.1989
(51) Int. Cl.: F16J 15/32

(54) **DICHTUNGSANORDNUNG**
SEALING ARRANGEMENT
GARNITURE D'ETANCHEITE

(30) Priorität: 29.06.1988 DE 3821873
(43) Veröffentlichungstag der Anmeldung: 20.02.1991
(73) Patentinhaber: Busak + Luyken GmbH & Co., D-70565 Stuttgart (DE)
(72) Erfinder: EDLUND, Roy, D-7000 Stuttgart 1 (DE)
(74) Vertreter: KOHLER SCHMID + PARTNER
(86) Internationale Anmeldenummer: DE8900308
(87) Internationale Veröffentlichungsnummer: WO9000233

(56) Entgegenhaltungen:
- DE-A- 3 603 669
- DE-C- 3 613 880
- GB-A- 876 985

## Beschreibung

Die Erfindung betrifft eine Anordnung zum Abdichten des Spaltes zwischen zwei zueinander konzentrischen, gegeneinander beweglichen Maschinenteilen, von denen das erste eine glatte Anlagefläche und das zweite einen profilierten Abschnitt mit zur Anlagefläche des ersten Maschinenteiles im wesentlichen senkrecht gerichteten Flanken aufweist, mit einem gegenüber dem zweiten Maschinenteil mittels der Flanken des profilierten Abschnittes bzw. mittels einer Flanke und eines unter Druck stehenden Mediums axial fixierten, an der Anlagefläche des ersten Maschinenteiles dicht anliegenden ersten Dichtring aus zähelastischem Kunststoff und einem zwischen dem ersten Dichtring und Flächenabschnitten des profilierten Abschnittes angeordneten zweiten Dichtring aus gummielastischem Material, der eine statische Abdichtung des ersten Dichtringes gegenüber dem zweiten Maschinenteil bewirkt und dessen axiale Lage in bezug auf das zweite Maschinenteil und den ersten Dichtring durch mindestens eine am ersten Dichtring vorhandene, zur Anlagefläche des ersten Maschinenteiles im wesentlichen senkrecht gerichtete Flanke und mindestens eine dieser Flanke gegenüberliegende Flanke des profilierten Abschnittes fixiert ist.

Eine solche Dichtungsanordnung ist aus der DE-A-36 03 669 (= EP-A-0235568) bekannt. Es handelt sich dabei um eine Doppelabstreifer-Anordnung, bei welcher der zweite Dichtring einen Spannring bildet, der den ersten Dichtring an dessen niederdruckseitigem Ende umgibt. Der erste Dichtring weist an seinem niederdruckseitigen Ende einen am ersten Maschinenteil flach anliegenden, einen Abstreifer bildenden Flächenabschnitt auf, während sich nahe dem anderen Ende eine am ersten Maschinenteil anliegende Dichtkante befindet. Dabei wird der erste Dichtring fast vollständig von einer im zweiten Maschinenteil angeordneten Nut aufgenommen und von dem Spannring, der sich an der niederdruckseitigen Flanke der Nut abstützt und eine im Bereich der Mitte des Dichtringes angeordnete, von einer Schulter gebildete Flanke axial belastet, gegen die hochdruckseitige Flanke der Nut gedrückt.

Aus der DE-C-36 13 880 (= EP-A-0242741) ist weiterhin eine Dichtungsanordnung bekannt, bei welcher am Grund einer Nut, die den ersten Dichtring aufnimmt, symmetrisch zur Mittelebene der Nut eine weitere Nut angeordnet ist, die den wiederum einen Spannring bildenden zweiten Dichtring aufnimmt, so daß der Spannring, dessen axiale Ausdehnung kleiner ist als die axiale Ausdehnung des ersten Dichtringes, den ersten Dichtring nur im Bereich seiner Mitte belastet und durch die weitere Nut in seiner Lage in bezug auf den ersten Dichtring festgelegt ist.

Es gibt noch eine Vielzahl weiterer Ausführungsformen von Dichtungsanordnungen, bei denen ein erster Dichtring, der ein dynamisches Dichtelement gegenüber dem ersten, bewegten Maschinenteil bildet, und ein den ersten Dichtring umgebender, gummielastischer zweiter Dichtring als statisches Dichtelement in einer Nut angeordnet und zueinander in einer definierten Lage gehalten sind, um die Wirkung des zweiten Dichtringes als Spannring in definierter Weise auf eine oder mehrere Dichtkanten des ersten Dichtringes zu lenken. Allen diesen Dichtungsanordnungen ist gemeinsam, daß die Dichtringe in einer Nut angeordnet sind, deren Flanken die Lage des ersten Dichtringes bestimmen. Die Anbringung solcher Nuten erfordert nicht nur kostspielige Arbeitsgänge, sondern hat noch den zusätzlichen Nachteil, daß auch der erste, aus einem zähelastischen Material bestehende Dichtungsring erheblich verformt werden muß, damit er in die Nuten eingelegt werden kann. Wenn sich die Nut an der Innenseite einer Bohrung befindet, läßt sich der aus einem zähelastischen Material bestehende Dichtring im allgemeinen soweit nach innen ein- und zusammendrücken, daß er in die Bohrung eingeführt und dann zum Einschnappen in die Nut freigegeben werden kann. Diz hierzu erforderlichen Kräfte und Materialverformungen werden umso stärker, je kleiner der Durchmesser der Bohrung in bezug auf den Querschnitt der Ringe ist. Bei Dichtungen kleinen Durchmessers können die zum Einlegen erforderlichen Verformungen so stark werden, daß dabei bleibende Schädigungen des Dichtungsringes auftreten können. In diesem Fall muß dann die Nut durch Verschließen einer einseitig offenen Aussparung durch einen Deckel o.dgl. hergestellt werden. Es ist ohne weiteres ersichtlich, daß hiermit hohe Herstellungskosten wie auch hohe Montagekosten verbunden sind. In dieser Hinsicht bereiten die eingangs beschriebenen Abstreifer-Anordnungen besondere Schwierigkeiten, weil die die Abstreiferkante aufweisenden Dichtringe wegen der hohen Beanspruchungen, denen die Abstreifkante ausgesetzt ist, einen relativ großen Querschnitt haben müssen.

Demgemäß liegt der Erfindung die Aufgabe zugrunde, eine Dichtungsanordnung der eingangs beschriebenen Art so weiterzubilden, daß eine Montage des Dichtringes möglich ist, ohne den Dichtring übermäßig starken Verformungen auszusetzen und ohne das zum Abschluß der Nut dienende, lösbare Bauteile vorgesehen werden müssen.

Diese Aufgabe wird nach der Erfindung dadurch gelöst, daß diejenige Flanke des profilierten Abschnittes des zweiten Maschinenizils, an der der zweite Dichtring anliegt, die benachbarte Stirnfläche des ersten Dichtringes nicht überschneidet und der zweite Dichtring zugleich ein Halteelement zur axialen Fixierung des ersten Dichtringes bildet.

Bei der erfindungsgemäßen Dichtungsanordnung kann demnach der erste Dichtring gänzlich ohne oder jedenfalls ohne nennenswerte Verformung axial in den Bereich des profilierten Abschnittes des zweiten Maschinenteils eingeschoben werden, während die Verformung des gummielastischen zweiten Dichtringes, gewöhnlich also eines Spannringes, die notwendig ist, um den zweiten Dichtring ebenfalls in den sich im zweiten Maschinenteil befindenden profilierten Abschnitt einzuführen, normalerweise keine Schwierigkeiten bereitet. Nachdem dann der zweite Dichtring seinen Platz gefunden hat, bildet er einerseits einen Anschlag für die an ihm anliegende Flanke des ersten Dichtringes und legt sich andererseits an der benachbarten Flanke des profilierten Abschnittes an, so daß er nunmehr eine axiale Verschiebung des ersten Dichtringes in Richtung des zweiten Dichtringes aus dem Bereich des profilierten Abschnittes heraus verhindert.

Bevorzugte Ausführungsformen der Erfindung umfassen Dichtungsanordnungen, bei denen, ähnlich wie bei der oben beschriebenen Abstreifer-Anordnung, der zweite Dichtring als Spannring einen Abschnitt des ersten Dichtringes umgibt und in eine an einem Ende des ersten Dichtringes angeordnete Aussparung eingreift und der erste Dichtring mit der sich an seinem anderen Ende befindenden Stirnfläche einer benachbarten Flanke des profilierten Abschnittes gegenübersteht. In diesem Fall wird also der erste Dichtring nur in einer Richtung durch den zweiten Dichtring gehalten, während in der anderen Richtung eine Verschiebung des ersten Dichtringes durch die Flanke des profilierten Abschnittes verhindert wird. Dabei kann sich die Aussparung mit dem zweiten Dichtring vorteilhaft am niederdruckseitigen Ende des ersten Dichtringes befinden, wie es auch bei der oben beschriebenen Abstreifer-Anordnung der Fall ist.

Eine andere bevorzugte Ausführungsform der Erfindung betrifft die Befestigung der Dichtungsringe von Kolben. In diesem Fall weist der erste Dichtring im Bereich seiner Mitte eine Ringnut auf, die einer im zweiten Maschinenteil angeordneten Nut gegenüberliegt. Der zweite Dichtring liegt dann sowohl an den beiden Flanken der im ersten Dichtring angeordneten als auch an den beiden Flanken der im zweiten Maschinenteil angeordneten Ringnut an. Dabei kann der erste Dichtring in bezug auf eine zu seiner Achse senkrechte Mittelebene im wesentlichen symmetrisch ausgebildet sein und an seinen beiden Enden je eine am ersten Maschinenteil anliegende Dichtkante aufweisen.

Bei einem Kolbenring handelt es sich um einen Dichtring, der am Umfang eines Kolbens oder einer Stange angeordnet ist. Bei der erfindungsgemäßen Anordnung kann der von dem ersten Dichtring gebildete Kolbenring einen solchen Durchmesser haben, daß er leicht auf den Kolben oder die Stange aufschiebbar ist. Die in der Mitte des ersten Dichtringes oder aber die im zweiten Maschinenteil angeordnete Nut ist tief genug ausgebildet, um den zweiten Dichtring beim Aufschieben des ersten Dichtringes aufzunehmen. Hat der erste Dichtring die Stelle erreicht, wo sich in dem Kolben oder der Stange die zugeordnete Nut befindet, schnappt der zweite Dichtring entweder in diese Nut oder in die Nut des ersten Dichtringes ein. Dabei ist diese Nut so bemessen, daß der Spannring noch immer etwa hälftig in die Nut des ersten Dichtringes bzw. des zweiten Maschinenteiles hineinragt und dadurch den ersten Dichtring an einer axialen Verschiebung gegenüber dem zweiten Maschinenteil hindert. Auch hier ist wieder gewährleistet, daß der vorzugsweise als O-Ring ausgebildete zweite Dichtring als Sekundärdichtung den ersten Dichtring gegenüber dem ersten Maschinenteil abdichtet, wogegen der erste Dichtring die Abdichtung gegenüber der Anlagefläche des zweiten Maschinenteiles gewährleistet.

Bei der soeben beschriebenen Ausführungsform der Erfindung ist der zur statischen Abdichtung des ersten Dichtringes dienende zweite Dichtring nur noch zwischen Flanken eingespannt, die zu der Anlag:fläche des ersten Maschinenteils im wesentlichen senkrecht stehen. Eine ähnliche Art der Abdichtung wird in weiterer Ausgestaltung der Erfindung bei einer Anordnung verwendet, bei der der erste und der zweite Dichtring axial hintereinander angeordnet und unter axialer Vorspannung zwischen entsprechenden Flanken des profilierten Abschnittes des zweiten Maschinenteiles eingebaut sind. In diesem Fall ist der zweite Dichtring ähnlich wie ein Sprengring an einer Stirnfläche des ersten Dichtringes angeordnet, übernimmt aber zusätzlich zu der axialen Abstützung noch die Funktion der statischen Abdichtung. Besonders bei dieser Ausführungsform, aber auch bei anderen Ausführungsformen der Erfindung kann der zweite Dichtring einen rechteckigen, vorzugsweise quadratischen Querschnitt aufweisen.

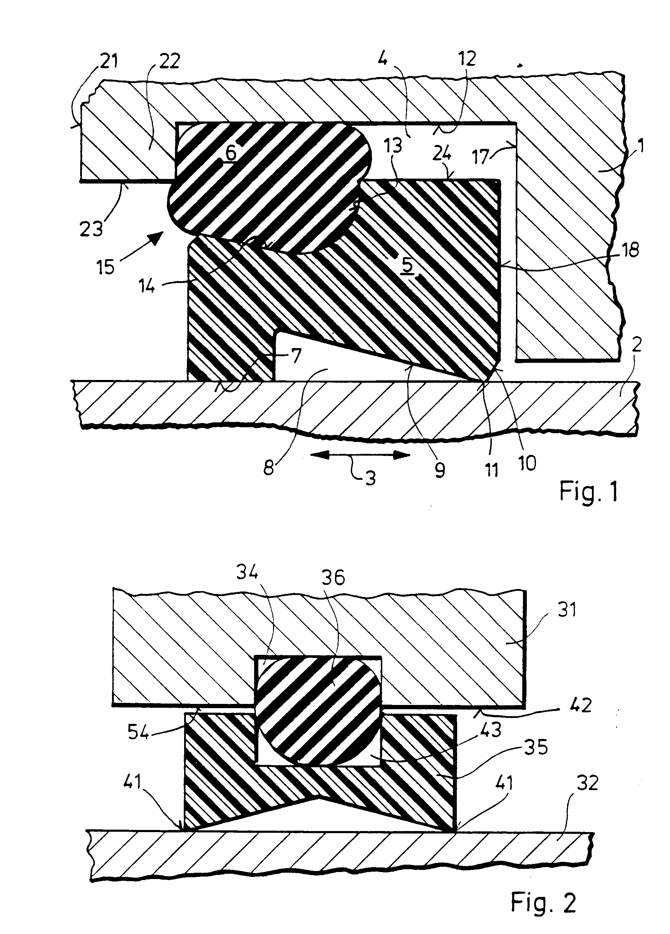

Die Erfindung wird im folgenden anhand der in der Zeichnung dargestellten Ausführungsbeispiele näher beschrieben und erläutert. Die der Beschreibung und der Zeichnung zu entnehmenden Merkmale können bei anderen Ausführungsformen der Erfindung einzeln für sich oder zu mehreren in beliebiger Rombination Anwendung finden. Die Figuren 1 bis 4 der Zeichnung zeigen in stark vergrößertem Maßstab jeweils einen Querschnitt durch eine Dichtungsanordnung nach der Erfindung.

Die in Figur 1 dargestellte Dichtungsanordnung dient zum Abstreifen von Leckageflüssigkeiten im Spalt zwischen zwei Maschinenteilen 1 und 2, die sich im Betrieb in Richtung des Pfeiles 3 axial gegeneinander bewegen. Typischerweise handelt es sich bei dem ersten Maschinenteil 2 um die Stange und bei dem zweiten Maschinenteil 1 um den Zylinderkopf einer hydraulischen Kolben-Zylinder-Einheit. In das zweite Maschinenteil 1 ist nahe von dessen äußerer Stirnfläche 21 eine zur Bewegungsrichtung 3 senkrechte, kreisringförmige Nut 4 eingestochen, in der sich ein erster Dichtring 5 und ein zweiter Dichtring 6 befinden. Der erste Dichtring 5 besteht aus einem zähelastischen Werkstoff wie Polyurethan. Er bildet einen Abstreifring und hat einen annähernd Z-förmigen Querschnitt mit sich parallel zu den Flanken der Nut 4 erstreckenden Querbalken. Das in bezug auf die Nut 4 außen liegende Ende des einen Querbalkens bildet einen am ersten Maschinenteil 2 flach anliegenden Flächenabschnitt 7, an den sich eine den Mittelteil der Z-Form begrenzende, im Querschnitt dreieckförmige Aussparung 8 anschließt. Am anderen Ende ist der Abstreifring 5 an der dem ersten Maschinenteil 2 zugewandten Seite mit einer Fase versehen, so daß zwei Regelflächen 9, 10 vorhanden sind, die sich in einer Dichtkante 11 schneiden, mit welcher der Abstreifring 5 nahe seinem anderen Ende am ersten Maschinenteil 2 anliegt. Der andere Querbalken der Z-Form steht mit seinem Ende dem Nutgrund 12 mit Abstand gegenüber, um radiale Auslenkungen aufzunehmen. In dem die Nut 4 nach außen abschließenden Steg 22 des Maschinenteiles 1 ist die Bohrung 23 für den Durchtritt des ersten Maschinenteiles 2 auf einen Durchmesser vergrößert, der im wesentlichen dem Durchmesser der Umfangsfläche 24 an dem anderen Querbalken der Z-Form gleich ist, die dem Nutgrund 12 gegenüber steht. Daher ist es möglich, den aus einem verhältnismäßig steifen Material bestehenden ersten Dichtring 5 ohne starke Deformation in den Bereich der Nut 4 einzuschieben.

Durch die Z-Form des Abstreifringes 5 entsteht eine dem Querbalken mit dem flachen Flächenabschnitt 7 gegenüberliegende Aussparung 13, die von einem zweiten Dichtungsring in Form eines gummielastischen O-Ringes 6 ausgefüllt ist. Die zum Nutgrund 12 konzentrische Fläche 14 der Aussparung steigt zum Ende des Abstreifringes 5 hin an, so daß sich die Aussparung 13 zum Ende des Abstreifringes 5 hin verengt. Dabei sind, wie aus Fig. 1 ersichtlich, die Abmessungen der Nut 4, des Abstreifringes 5 mit der Aussparung 13 und des O-Ringes 6 so gewählt, daß der O-Ring 6, bei in Fig. 1 nach rechts bis zur Flanke 17 der Nut 4 verschobenem Abstreifring 5 aufgrund seiner gummielastischen Verformbarkeit durch den Spalt 15 zwischen dem Steg 22 des Maschinenteiles 1 und dem benachbarten Abschnitt des Abstreifringes 5 in die Aussparung 13 hineingedrückt werden kann. Andernfalls wäre es auch möglich, den Abstreifring 5 nach dem Einsetzen des O-Ringes 6 unter einer hierfür üblichen Verformung in die Nut 4 einzufügen. In jedem Fall erfährt unter dem Einfluß eines auf die in Fig.1 rechte Flanke 18 des ersten Dichtringes 5 wirkenden Mediumdruckes, der versucht, den ersten Dichtring 5 in Fig. 1 nach links zu verschieben, der O-Ring 6 eine erhebliche Verformung, wie sie in der Zeichnung angedeutet ist. Der O-Ring 6 bildet zusätzlich zu seiner Funktion als Spannring 6 einen festen Anschlag für den Abstreifring 5, über den sich der Abstreifring 5 an der vom Steg 22 gebildeten, niederdruckseitigen Flanke der Nut 4 abstützt. Demgemäß bildet der O-Ring 6 nicht nur in herkömmlicher Weise eine Sekundärdichtung zum Abdichten des Abstreifringes 5 gegenüber dem ersten Maschinenteil 1, sondern auch ein Halteelement für den Abstreifring 5, welches wirksam verhindert, daß der Abstreifring 5 zur Niederdruckseite hin aus der Nut 4 hinausgedrückt wird. Ein besonderer Vorteil dieser Anordnung besteht noch darin, daß der Ringspalt zwischen den beiden Maschinenteilen 1, 2 an der Niederdruckseite der Dichtungsanordnung, also der Spalt zwischen der Innenseite der Bohrung 23 im Maschinenteil 1 und der Umfangsfläche der Stange 2, sehr viel größer ist als bei den bisher bekannten Dichtungsanordnungen dieser Art, so daß die Gefahr, daß sich in einem solchen Spalt Schmutz festsetzen und zu Betriebsstörungen Anlaß geben kann, bedeutend vermindert ist.

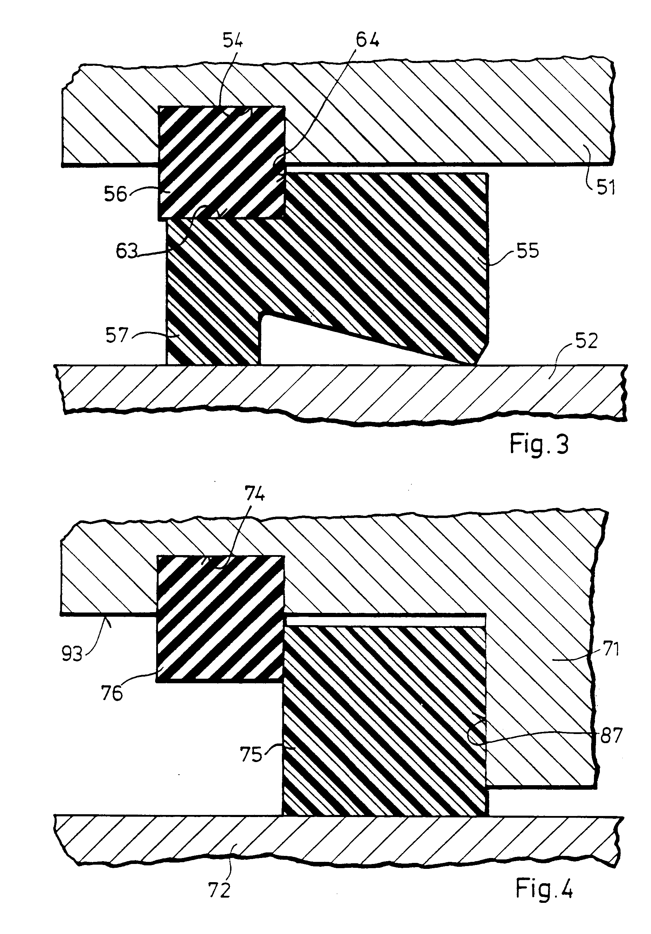

Bei der in Fig. 2 dargestellten Ausführungsform ist wiederum der aus einem zähelastischen Material wie z.B. Polyurethan oder PTFE bestehende Dichtring 35 gegenüber dem zweiten Maschinenteil 31 mittels eines als Halteelement dienenden O-Ringes 36 befestigt, der einerseits in eine im Teil 31 angebrachte Ringnut 34 und andererseits in eine entsprechende, in dem Dichtring 35 angeordnete Ringnut 43 eingreift, die der Ringnut 34 gegenübersteht. In diesem Fall handelt es sich bei dem Maschinenteil 31 um einen Kolben, an dessen Umfang die aus dem Dichtring 35 und dem O-Ring 36 bestehende Dichtungsanordnung befestigt ist, die gegenüber dem ersten Maschinenteil 32, bei dem es sich um einen Zylinder handelt, eine Axialbewegung ausführt. Da ein Kolben gewöhnlich beidseitig mit einem Druckmedium beaufschlagt wird, ist der Dichtring 35 symmetrisch ausgebildet und weist an seinen beiden Enden jeweils eine Dichtkante 41 auf.

In diesem Fall ist der Dichtring 35 nicht selbst in einer Nut 34 angeordnet, sondern umgibt die Umfangsfläche 42 des Kolbens 31 mit einem gewissen Abstand. Eine Nut 43 an der dem Kolben 31 zugewandten Umfangsfläche 54 ist tief genug, um dem beim Aufschieben des Dichtringes 35 gedehnten O-Ring 36 Platz zu bieten. Nach Erreichen der Nut 34 an der Umfangsfläche des Maschinenteiles 31 schnappt der O-Ring 36 in diese Nut unter dem Einfluß ihrer inneren, durch das Dehnen erzeugten Spannung ein, wodurch der Dichtring 35 gegenüber dem Maschinenteil 31 fixiert und zugleich abgedichtet wird.

Die in Fig. 3 dargestellte Ausführungsform unterscheidet sich von der Ausführungsform nach Fig. 1 im wesentlichen dadurch, daß das zweite Maschinenteil 51 an seiner Innenfläche lediglich eine Ringnut 54 zur Aufnahme des zur statischen Abdichtung des ersten Dichtringes 55 gegenüber dem zweiten Maschinenteil 51 dienenden zweiten Dichtringes 56 aufweist. Der zweite Dichtring 56, der wiederum in eine stufenförmige Aussparung 63 am niederdruckseitigen Endz des ersten Dichtringes 55 eingreift und im Bereich dieser Aussparung den ersten Dichtring 55 umgibt, bildet demnach wiederum einen Spannring, der den am ersten Maschinenteil 52 anliegenden Abschnitt 57 des ersten Dichtringes 55 belastet. Gleichzeitig dient der zweite Dichtring 56 zur axialen Fixierung des ersten Dichtringes 55, der mit der vertikalen Flanke 64 der Aussparung 63 an der benachbarten Stirnfläche des zweiten Dichtringes 56 anliegt. Dabei ist die axiale Fixierung durch die Wahl eines im wesentlichen quadratischen Querschnittes für den zweiten Dichtring 56 zur Aufnahme besonders hoher Kräfte geeignet. Die statische Abdichtung erfolgt durch Zusammenpressen des zweiten Dichtringes 56 durch das auf die hochdrucksfitige Flanke dieses Dichtringes wirkende Medium in der Nut 54, wodurch, da der zweite Dichtungsring axial nicht ausweichen kann, eine entsprechend hohe Flächenpressung in radialer Richtung erzeugt wird, also eine entsprechend gute Abdichtung sowohl am Grund der Nut 54 als auch an der gegenüberliegenden Fläche der stufenförmigen Aussparung 63 des ersten Dichtringes 55. Der Mediumdruck bewirkt weiterhin eine stets einwandfreie Anlage des ersten Dichtringes 55 an dem zweiten Dichtring 56. Auch hier besteht der Vorteil wiederum in der sehr einfachen Ausbildung der Maschinenteile, der Möglichkeit, den ersten Dichtungsring 55 ohne Verformen in die Bohrung des zweiten Maschinenteiles 52 einführen zu können und endlich in dem großen Spalt zwischen den beiden Maschinenteilen 51, 52 an der Niederdruckseite der Anordnung, die einem Festsetzen von Schmutzteilchen entgegenwirkt.

Eine weitere Variante der erfindungsgemäßen Dichtungsanordnung ist in Fig. 4 dargestellt. Hier sind zwei Dichtringe 75 und 76 axial hintereinander angeordnet. Dabei ist der erste Dichtring 75, der zur Abdichtung des bewegten Maschinenteiles 72 gegenüber dem ruhenden Maschinenteil 71 dient, axial zwischen einer Flanke 87 des zur Aufnahme der Dichtungsanordnung dienenden, erweiterten Abschnittes 93 der Bohrung im zweiten Maschinenteil 71, die von dem ersten Maschinenteil 72 durchsetzt wird, und der hochdruckseitigen Stirnfläche des zweiten Dichtringes 76 eingespannt, der in eine entsprechende Nut 74 im zweiten Maschinenteil 71 eingelegt ist. In diesem Fall erfolgt die statische Abdichtung des ersten Dichtringes 75 gegenüber dem zweiten Maschinenteil 71 an den Stirnflächen des zur statischen Abdichtung dienenden, zweiten Dichtringes 76, für die Voraussetzung ist, daß die Dichtungsanordnung unter axialer Vorspannung steht, damit die von dem Hochdruckmedium auf den ersten Spannring 75 in Fig. 4 von rechts ausgeübten Druckkräfte eine entsprechende Erhöhung der zur Abdichtung dienenden Flächenpressungen zur Folge haben und nicht etwa, wegen fehlender Anfangspressung, beim Druckaufbau in vorhandene Spalte eindringen und diese Spaltz sogar noch vergrößern kann. Auch hier wird durch die Verwendung eines im Querschnitt rechteckigen und vorzugsweise quadratischen zweiten Dichtringes 76 sowohl eine besonders gute axiale Abstützung als auch statische Abdichtung des am ersten Maschinenteil 72 anliegenden ersten Dichtringes 75 gegenüber dem zweiten Maschinenteil 71 erzielt.

Auch hier besteht der besondere Vorteil der Dichtungsanordnung in ihrer extrem einfachen Ausbildung und der Möglichkeit, den steifen ersten Dichtungsring 75 ohne die Notwendigkeit einer Verformung einbauen zu können. Es ist ersichtlich, daß eine zum ersten Dichtring 75 symmetrische Anordnung, bei der sich zweite Dichtringe zu beiden Seiten des ersten Dichtringes befinden, auch zur Fixierung eines Kolbenringes verwendet werden könnte.

Es ist ohne weiteres ersichtlich, daß bei Dichtungsanordnungen, die aus einem Dichtring und einem dazu konzentrischen gummielastischen Spannring bestehen, durch die erfindungsgemäße Verwendung des Spannringes als Halteelement für den Dichtring eine erhebliche Vereinfachung der Maschinenteile bei der Anbringung solcher Dichtungsanordnungen erzielt werden kann, weil es nicht mehr notwendig ist, entweder den Dichtring zum Einlegen in erheblichem Maße zu verformen und dadurch gegebenenfalls zu beschädigen oder aber die zur Aufnahme der Dichtringe vorgesehenen Nuten einseitig durch lösbare Ringe abzuschließen. Dabei kann die Erfindung grundsätzlich bei allen Dichtungsanordnungen Anwendung finden, die aus einem Dichtring und einem gummielastischen Spannring bestehen, von denen der Dichtring die Primärdichtung gegenüber einem relativ zur Dichtung bewegten Maschinenteil bildet, während der Spannring als Sekundärdichtung zum Abdichten des Dichtringes gegenüber dem in bezug auf den Dichtring unbewegten Maschinenteil dient. Dabei kommt es auf die Querschnittsform des Dichtringes nur insoweit an, daß dieser Dichtring mindestens eine Flanke aufweisen muß mit der er an dem als Halteelement dienenden Spannring zur Anlage kommt. Die Querschnittsform des Spannringes kann beliebig sein und in einer Weise gewählt werden, die zu einer Kombination optimaler Halte- und Dichtungseigenschaften führt. Neben O-Ringen kommen demnach auch beispielsweise Quadringe sowie Dichtungsringe mit rechteckigem oder quadratischen Querschnitt oder auch Ringe mit besonderen Anlageprofilen in Frage.

## Patentansprüche

1. Anordnung zum Abdichten des Spaltes zwischen zwei zueinander konzentrischen, gegeneinander beweglichen Maschinenteilen, von denen das erste eine glatte Anlagefläche und das zweite einen profilierten Abschnitt (4; 34; 54; 74) mit zur Anlagefläche des ersten Maschinenteiles (2; 32; 52; 72) im wesentlichen senkrecht gerichteten Flanken aufweist, mit einem gegenüber dem zweiten Maschinenteil (1; 31; 51; 71) mittels der Flanken des profilierten Abschnittes bzw. mittels einer Flanke und eines unter Druck stehenden Mediums axial fixierten, an der Anlagefläche des ersten Maschinenteiles (2; 32; 52; 72) dichtend anliegend ersten Dichtring (5; 35; 55; 75) aus zähelastischem Kunststoff und einem zwischen dem ersten Dichtring (5; 35; 55; 75) und Flächenabschnitten des profilierten Abschnittes angeordneten zweiten Dichtring (6; 36; 56; 76) aus gummielastischem Material, der eine statische Abdichtung des ersten Dichtringes (5; 35; 55; 75) gegenüber dem zweiten Maschinenteil (1; 31; 51; 71) bewirkt und dessen axiale Lage in bezug auf das zweite Maschinenteil (1; 31; 51; 71) und den ersten Dichtring (5; 35; 55; 75) durch mindestens eine am ersten Dichtring (5; 35; 55; 75) vorhandene, zur Anlagefläche des ersten Maschinenteiles (2; 32; 52; 72) im wesentlichen senkrecht gerichtete Flanke und mindestens eine dieser Flanke gegenüberliegende Flanke des profilierten Abschnittes fixiert ist,
dadurch gekennzeichnet,
daß diejenige Flanke des profilierten Abschnittes (4; 34) des zweiten Maschinenteils (1; 31), an der der zweite Dichtring (6; 36) anliegt, die benachbarte Stirnfläche des ersten Dichtringes (5; 35) nicht überschneidet und der zweite Dichtring (6; 36) zugleich ein Halteelement zur axialen Fixierung des ersten Dichtringes (5; 35) bildet.

2. Anordnung nach Anspruch 1, dadurch gekennzeichnet, daß der zweite Dichtring (6) als Spannring einen Abschnitt des ersten Dichtringes (5) umgibt und in eine an einem Ende des ersten Dichtringes (5) angeordnete Aussparung (13) eingreift und der erste Dichtring (5) mit der sich an seinem anderen Ende befindenden Stirnfläche (18) einer benachbarten Flanke des profilierten Abschnittes (4) gegenübersteht.

3. Anordnung nach Anspruch 2, dadurch gekennzeichnet, daß sich die Aussparung (13) mit dem zweiten Dichtring (6) am niederdruckseitigen Ende des ersten Dichtringes (5) befindet.

4. Anordnung nach Anspruch 3, dadurch gekennzeichnet, daß der erste Dichtring (5) an seinem von dem zweiten Dichtring (6) umschlossenen, niederdruckseitigen Ende einen am ersten Maschinenteil (2) flach anliegenden, einen Abstreifer bildenden Flächenabschnitt (7) aufweist und nahe dem anderen Ende am ersten Maschinenteil (2) mit einer Dichtkante (11) anliegt, die von der Schnittlinie zweier nach außen bzw. in Richtung auf den flachen Flächenabschnitt (7) ansteigenden Kegelflächen (9, 10) gebildet wird.

5. Anordnung nach Anspruch 1, dadurch gekennzeichnet, daß der erste Dichtring (35) im Bereich seiner Mitte eine Ringnut (43) aufweist, die einer im zweiten Maschinenteil (31) angeordneten Nut (34) gegenüberliegt, und der zweite Dichtring (36) sowohl an den beiden Flanken der im ersten Dichtring (35) angeordneten als auch an den beiden Flanken der im zweiten Maschinenteil (31) angeordneten Ringnut (43 bzw. 34) anliegt.

6. Anordnung nach Anspruch 5, dadurch gekennzeichnet, daß der erste Dichtring (35) in bezug auf eine zu seiner Achse senkrechte Mittelebene im wesentlichen symmetrisch ausgebildet ist und an seinen beiden Enden je eine Dichtkante (41) aufweist.

7. Anordnung nach Anspruch 1, dadurch gekennzeichnet, daß der erste und der zweite Dichtring (75, 76) axial hintereinander angeordnet und unter axialer Vorspannung zwischen entsprechenden Flanken (87) des profilierten Abschnittes des zweiten Maschinenteiles (71) eingebaut sind.

8. Anordnung nach einem der vorhergehenden Ansprüchen, dadurch gekennzeichnet, daß der zweite Dichtring (56; 76) einen rechteckigen, vorzugsweise quadratischen Querschnitt aufweist.

## Claims

1. An arrangement for sealing the gap between two machine elements which are movable and provided in concentrical arrangement relative to each other, the first of them having a smooth contact surface, while the second comprises of a profiled section (4; 34; 54;74) with flanks extending substantially perpendicularly relative to the contact surface of the first machine element (2; 32; 52; 72), comprising of a first sealing ring (5; 35; 55; 75) made of a tough-elastic synthetic material, which is fixed in the axial direction, relative to the second machine element (1; 31; 51; 71), by means of the flanks of the profiled section and respectively by means of a flank and a medium which is under pressure, and which rests in a sealing manner against the said contact surface of the first machine element (2; 32; 52; 72), and a second sealing ring (6; 36; 46; 76) made of a rubber-elastic material which is arranged between the said first sealing ring (5; 35; 55; 75) and surface portions of the said profiled section, which seals the said first sealing ring (5; 35; 55; 75) statically relative to the said second machine element (1; 31; 51; 71) and whose axial position relative to the said second machine element (1; 31; 51; 71) and to the said first sealing ring (5; 35; 55; 75) is fixed by at least one flank of the said first sealing ring (5; 35; 55; 75), which extends in a substantially perpendicular direction relative to the said contact surface of the first machine element (2; 32; 52; 72), and at least another flank of the said profiled section provided opposite to that first-mentioned flank,
characterised in that the flank of the said profiled section (4; 34) of the said second machine element (1; 31), which serves as supporting surface for the said second sealing ring (6; 36), does not overlap the neighbouring end face of the said first sealing ring (5; 35) and that the said second sealing ring (6; 36) forms at the same time a retaining element for fixing the said first sealing ring (5; 35) in the axial direction.

2. An arrangement according to claim 1, characterised in that the said second sealing ring (6) acts as a stressing ring embracing a portion of the said first sealing ring (5) and engages in a recess (13) provided at one end of the said first sealing ring (5) and that the end face (18) provided at the said other end of the first sealing ring (5) is arranged opposite to a neighbouring flank of the said profiled section (4).

3. An arrangement according to claim 2, characterised in that the said recess (13), together with the said second sealing ring (6), is provided at the low-pressure end of the said first sealing ring (5).

4. An arrangement according to claim 3, characterised in that the said first sealing ring (5) is provided, at its low-pressure end, which is embraced by the said second sealing ring (6), with a surface portion (7) resting flat against the said first machine element (2) and forming a wiper and is in contact with the said first machine element (2) by a sealing edge (11) at a point near its other end, the said sealing edge (11) being formed by the line of intersection between two conical surfaces (9, 10) rising outwardly or toward the said flat surface portion (7).

5. An arrangement according to claim 1, characterised in that the said first sealing ring (35) is provided with an annular groove (43) in the area of its central portion, opposite to a groove (34) arranged in the said second machine element (31) and that the said second sealing ring (36) rests against both pairs of flanks of the said annular grooves (43 and 34) which are arranged in the first sealing ring (35) and in the second machine element (31), respectively.

6. An arrangement according to claim 5, characterised in that the said first sealing ring (35) exhibits a substantially symmetrical design, relative to a central plane extending perpendicularly to its axis, and is provided with a sealing edge (41) at each of its ends.

7. An arrangement according to claim 1, characterised in that the said first and the said second sealing rings (75, 76) are arranged, one behind the other, in the axial direction, and are installed at a certain axial initial tension between corresponding flanks (87) of the said profiled section of the said second machine element (71).

8. An arrangement according to any of the preceding claims, characterised in that the said second sealing ring (56; 76) exhibits a rectangular, preferably a square, cross-section.

## Revendications

1. Dispositif d'étanchéification de l'interstice entre deux pièces de machine mutuellement concentriques, déplaçables l'une par rapport à l'autre, dont la première présente une surface d'appui lisse et la deuxième une section profilée (4; 34; 54; 74) avec des flancs dirigés sensiblement perpendiculairement à la surface d'appui de la première pièce de machine (2; 32; 52; 72), comprenant un premier anneau d'étanchéité (5; 35; 55; 75) en matière synthétique viscoélastique qui est fixé axialement par rapport à la deuxième pièce de machine (1; 31; 51; 71) au moyen des flancs de la section profilée ou respectivement au moyen d'un flanc et d'un milieu sous pression et qui est en appui étanche sur la surface d'appui de la première pièce de machine (2; 32; 52; 72) et un deuxième anneau d'étanchéité (6; 36; 56; 76) en matière élastique de type caoutchouc qui est agencé entre le premier anneau d'étanchéité (5; 35; 55; 75) et des sections de surface de la section profilée et provoque une étanchéification statique du premier anneau d'étanchéité (5; 35; 55; 75) par rapport à la deuxième pièce de machine (1; 31; 51; 71) et dont la position axiale par rapport à la deuxième pièce de machine (1; 31; 51; 71) et au premier anneau d'étanchéité (5; 35; 55; 75) est fixée par au moins un flanc présent sur le premier anneau d'étanchéité (5; 35; 55; 75) et dirigé sensiblement perpendiculairement à la surface d'appui de la première pièce de machine (2; 32; 52; 72) et par au moins un flanc, opposé à ce dernier flanc, de la section profilée,
caractérisé en ce que le flanc de la section profilée (4; 34) de la deuxième pièce de machine (1; 31), sur lequel le deuxième anneau d'étanchéité (6; 36) est en appui, ne croise pas la surface frontale voisine du premier anneau d'étanchéité (5; 35), et en ce que le deuxième anneau d'étanchéité (6; 36) forme simultanément un élément de retenue pour la fixation axiale du premier anneau d'étanchéité (5; 35).

2. Dispositif suivant la revendication 1, caractérisé en ce que le deuxième anneau d'étanchéité (6) entoure, en tant qu'anneau de serrage, une section du premier anneau d'étanchéité (5) et pénètre dans un évidement (13) agencé à une extrémité du premier anneau d'étanchéité (5) et en ce que le premier anneau d'étanchéité (5) est situé, avec sa surface frontale (18) située à son autre extrémité, en face d'un flanc voisin de la section profilée (4).

3. Dispositif suivant la revendication 2, caractérisé en ce que l'évidement (13) se trouve avec le deuxième anneau d'étanchéité (6) à l'extrémité du côté basse pression du premier anneau d'étanchéité (5).

4. Dispositif suivant la revendication 3, caractérisé en ce que le premier anneau d'étanchéité (5) présente, à son extrémité du côté basse pression entourée par le deuxième anneau d'étanchéité (6), une section de surface (7) qui est en appui à plat sur la première pièce de machine (2) et qui forme un racloir et en ce que, à proximité de l'autre extrémité, il est en appui sur la première pièce de machine (2) par une arête d'étanchéité (11) qui est formée par la ligne d'intersection entre deux surfaces coniques (9, 10) qui sont ascendantes vers l'extérieur et respectivement en direction de la section de surface plate (7).

5. Dispositif suivant la revendication 1, caractérisé en ce que le premier anneau d'étanchéité (35) présente dans la zone de son milieu une rainure annulaire (43) qui est située en face d'une rainure (34) agencée dans la deuxième pièce de machine (31) et en ce que le deuxième anneau d'étanchéité (36) est en appui aussi bien sur les deux flancs de la rainure annulaire (43) agencée dans le premier anneau d'étanchéité (35) que sur les deux flancs de la rainure annulaire (34) agencée dans la deuxième pièce de machine (31).

6. Dispositif suivant la revendication 5, caractérisé en ce que le premier anneau d'étanchéité (35) est réalisé de manière sensiblement symétrique par rapport à un plan médian perpendiculaire à son axe et en ce qu'il présente à chacune de ses deux extrémités une arête d'étanchéité (41).

7. Dispositif suivant la revendication 1, caractérisé en ce que les premier et deuxième anneaux d'étanchéité (75, 76) sont disposés axialement l'un derrière l'autre et sont, par une tension initiale axiale, encastrés entre des flancs correspondants (87) de la section profilée de la deuxième pièce de machine (71).

8. Dispositif suivant l'une des revendications précédentes, caractérisé en ce que le deuxième anneau d'étanchéité (56; 76) présente une section transversale rectangulaire, de préférence carrée.
